# FASCICULE DE BREVET EUROPEEN

(11) **EP 1 674 335 B1**
(45) Date de publication et mention de la délivrance du brevet: **01.02.2012**
(21) Numéro de dépôt: 05301050.0
(22) Date de dépôt: 13.12.2005
(51) Int. Cl.: B60N 2/64, B60N 2/68, B60N 2/70

(54) **Siège de voiture automobile comprenant un dossier pourvu d'une coque**
Kraftfahrzeugsitz mit Schalenrückenlehne
Automobile seat with a backrest having a shell

(30) Priorité: 24.12.2004 FR 0413889
(43) Date de publication de la demande: 28.06.2006
(73) Titulaire: Renault s.a.s., 92100 Boulogne Billancourt (FR)
(72) Inventeur: Puyravaud, Christophe, 92100 Boulogne Billancourt (FR)

(56) Documents cités:
- FR-A- 2 837 151
- US-A- 6 027 171
- US-A1- 2001 005 095

## Description

La présente invention concerne le domaine des sièges, notamment des sièges de véhicules automobiles.

Un siège de véhicule automobile est généralement prévu avec possibilité de réglage de sa position relativement à la structure du véhicule et de l'inclinaison d'un dossier par rapport à une assise. Pour ce faire, le dossier est relié à l'assise par une liaison articulée selon un axe transversal, et l'assise est montée sur le plancher du véhicule par l'intermédiaire de glissières.

Le dossier est généralement équipé d'une armature sur laquelle est montée une nappe de maintien constituée d'éléments métalliques formant ressort, et d'une matelassure en mousse recouvrant entièrement ladite armature. La matelassure peut être obtenue par injection de polyuréthane. En fonction de sa densité et de sa résistance, la matelassure apporte à l'occupant du siège un confort postural et permet de filtrer les vibrations pouvant être induites par le revêtement ou par les éléments de suspension du véhicule automobile. L'armature métallique, qui doit résister en cas de choc violent du véhicule automobile avec un obstacle, présente des dimensions relativement importantes et un poids élevé. Un siège de véhicule automobile est ainsi, de manière générale, relativement encombrant.

A l'heure actuelle, afin d'accroître l'agrément de confort des occupants des véhicules automobiles, on cherche à diminuer au maximum le volume des éléments implantés à l'intérieur des habitacles du véhicule, notamment des dossiers de sièges.

On connaît, par le document DE-A-199 51 625, un siège pour véhicule automobile comprenant une assise et un dossier articulé muni d'un appui-tête intégré. L'assise et le dossier comprennent respectivement un baquet, par exemple réalisé en polyester, sur lequel est montée une matelassure de mousse.

Un tel siège de véhicule automobile présente non seulement l'inconvénient d'engendrer une fabrication relativement complexe, mais nécessite également, de par sa conception, et pour satisfaire aux exigences de sécurité, un dossier pourvu d'un baquet d'épaisseur importante, et donc relativement coûteux pouvant être ainsi incompatible avec une industrialisation en grande série.

On connaît également, par le document EP-A-1 190 894, un dossier de siège de véhicule automobile comprenant un cadre pourvu d'une traverse horizontale rigide montée sensiblement au milieu du cadre, et d'éléments de rigidification disposés principalement au niveau de parties latérales dudit cadre afin de le rigidifier et de résister en cas de choc violent pouvant survenir contre le dossier, par exemple lorsque le véhicule automobile entre en contact avec un obstacle.

Outre le fait que le dossier présente des éléments de rigidification nécessitant la conception et la fabrication d'un moule spécifique et complexe, lesdits éléments ne permettent pas une réduction significative de l'épaisseur de l'armature du dossier afin d'accroître sensiblement l'espace libre dans l'habitacle du véhicule automobile à l'intérieur duquel le siège est monté.

On peut encore citer le document US 2001/005095 qui décrit un dossier de siège pourvu d'un cadre dont les montants latéraux permettent l'articulation du dossier sur l'assise, ce dossier comprenant en outre une plaque plane rectangulaire. Il en découle un probléme d'encombrement, notamment.

La présente a donc pour but de résoudre ces inconvénients en proposant un siège, notamment pour véhicule automobile, de conception simple, économique, facile à monter et présentant un encombrement réduit.

A cet effet, l'invention a pour objet un siège, notamment pour véhicule automobile, comprenant une assise et un dossier équipé d'une armature rigide comprenant au moins deux montants de support et une coque rigide montée sur les éléments de support, ladite coque formant structure de dossier et présentant une surface sensiblement courbe, les éléments d'articulation de l'assise étant montés sur la coque rigide.

Un siège comprenant un dossier équipé d'une telle coque permet de réduire sensiblement, par rapport à un dossier conventionnel, l'encombrement du dossier dans les zones latérales du siège.

En d'autres termes, le galbe de la coque du dossier permet un gain de place pour une personne se trouvant assise à l'arrière d'un tel siège, notamment au niveau des portions latérales du dossier. Il résulte ainsi une augmentation de l'espace disponible à l'arrière du siège permettant notamment d'accroître le confort pour un passager arrière, lorsque le siège est monté à l'avant du véhicule automobile.

Par ailleurs, l'utilisation d'une coque et de montants de support permet d'obtenir, de manière relativement économique, un dossier particulièrement rigide présentant des caractéristiques mécaniques sensiblement équivalentes à celles de dossiers de sièges conventionnels. Ainsi, la combinaison de montants de support et d'une coque montée sur lesdits montants présente l'avantage de pouvoir prévoir une coque avec une épaisseur relativement faible, permettant ainsi un gain de place tout en respectant les exigences imposées par les réglementations relatives à la sécurité de l'occupant d'un siège.

Dans un mode de réalisation préféré, l'armature comprend, en outre, des traverses inférieure et supérieure montées à chaque extrémité des montants de support.

Préférentiellement, la traverse inférieure est disposée à proximité d'une extrémité inférieure du dossier, et apte à assurer au moins en partie la protection du dos d'un occupant du siège.

Une telle disposition de la traverse inférieure permet d'assurer une protection du dos de l'occupant, par exemple lors d'un freinage brusque ou lors d'une collision, pour arrêter des passagers ou des objets se trouvant à l'arrière du dossier sans qu'il soit nécessaire de prévoir un élément additionnel au cadre engendrant un surcoût et pouvant également diminuer l'habitabilité du véhicule automobile.

De préférence, la traverse inférieure est en concordance de forme avec ladite coque montée en contact sur ladite traverse.

Avantageusement, les montants de support et au moins une des traverses comprennent des éléments évidés.

L'utilisation de tels éléments permet d'accroître certaines caractéristiques mécaniques du dossier par rapport à des éléments pleins de dimension équivalente tout en réduisant le prix de revient et le poids du siège.

Préférentiellement, les montants de support et les traverses sont réalisés en acier.

Dans un mode de réalisation, la coque est soudée sur les montants de support et sur au moins une des traverses.

La traverse supérieure peut comprendre des évidements aptes à permettre le passage de tiges de support d'un appui-tête du dossier et/ou le dossier peut être équipé, en outre, d'une matelassure recouvrant au moins en partie la coque.

La présente invention et ses avantages seront mieux compris à l'étude de la description détaillée d'un mode de réalisation pris à titre d'exemple nullement limitatif et illustré par les dessins annexés, sur lesquels :
- la figure 1 représente schématiquement en perspective un siège de véhicule automobile comprenant un dossier suivant un aspect de l'invention, et
- la figure 2 est une vue de côté de la figure 1.

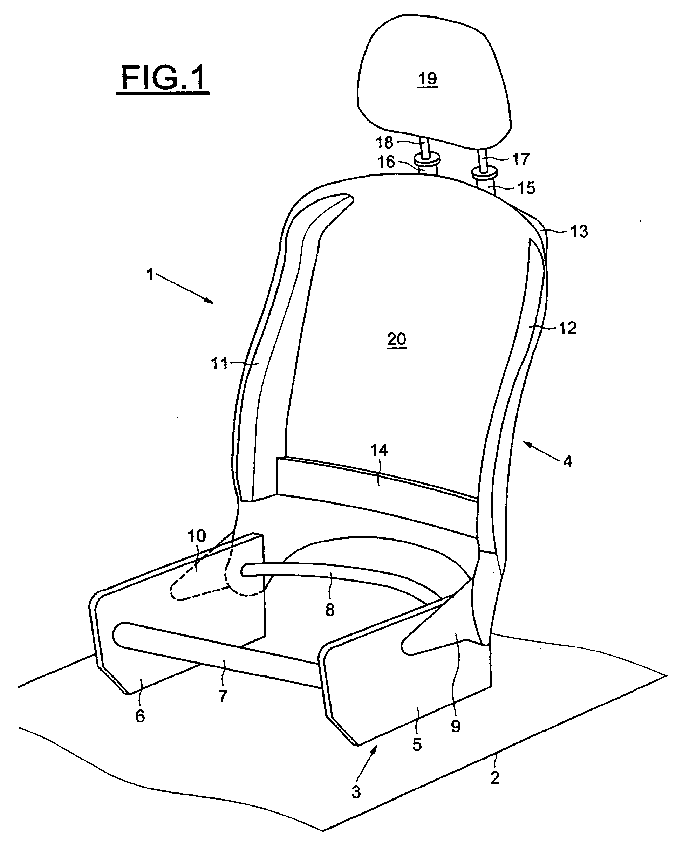

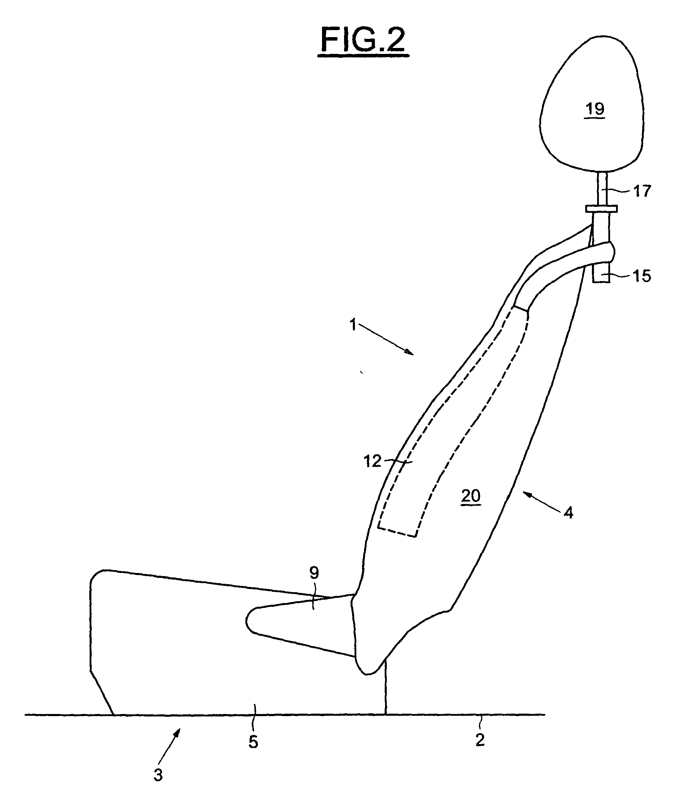

Comme on peut le voir sur les figures 1 et 2, un siège 1 de véhicule est monté sur un plancher 2. Un tel siège 1 peut indifféremment être un siège avant ou un siège arrière.

Le siège 1 comprend une assise 3 et un dossier 4 articulé sur ladite assise 3 (non représenté). L'assise 3 comprend deux armatures 5, 6 le plus souvent symétriques et s'étendant sensiblement horizontalement. Lesdites armatures 5, 6 sont fixées ici rigidement au plancher 2. Bien entendu, il est également possible de prévoir des glissières montées sur le plancher 2 et aptes à permettre un déplacement longitudinal du siège 1 par rapport audit plancher 2. L'assise 3 comprend également des barres 7, 8 s'étendant sensiblement transversalement entre les armatures 5, 6, et des éléments d'articulation 9, 10 montés respectivement sur lesdites armatures, du côté extérieur. Les éléments d'articulation 9, 10 sont articulés (non représenté) au niveau des armatures 5, 6 pour permettre l'inclinaison du dossier 4 par rapport aux dites armatures, une extrémité inférieure du dossier étant fixée sur les éléments d'articulation 9, 10.

Le dossier 4 comprend une armature rigide équipée de deux montants de support 11, 12 latéraux reliés horizontalement à leurs extrémités supérieure et inférieure respectivement par des traverses 13, 14. Les montants de support 11 et 12, symétriques, s'étendent ici longitudinalement du côté opposé à l'assise 3, i.e. vers l'arrière. Les montants de support 11, 12 présentent ici, en vue de côté, une forme générale arrondie. Les traverses 13, 14 présentent, en vue de dessus, une forme sensiblement concave orientée vers l'avant.

Les montants de support latéraux 11, 12 et les traverses 13, 14 comprennent avantageusement des éléments creux. La traverse 13 est constituée par un tube cylindrique afin d'obtenir une traverse haute dépourvue d'arêtes vives pour ne pas blesser la tête d'un occupant se trouvant derrière le siège 1. Les montants de support latéraux 11, 12 et la traverse 14 présentent en section droite un profil de forme générale rectangulaire. Bien entendu, il est également envisageable de prévoir des montants de support et une traverse supérieure comprenant des éléments pleins. Toutefois, l'utilisation de tels éléments évidés présente l'avantage d'accroître la rigidité du dossier 4 tout en réduisant son coût et son poids. La traverse 14 présente une épaisseur sensiblement réduite par rapport à celle des montants de support latéraux 11, 12 et de la traverse 13.

Les montants de support 9, 10 et les traverses 13, 14 peuvent avantageusement être obtenus par découpe, emboutissage et pliage à partir d'un flan en tôle d'acier d'épaisseur mince.

La traverse 14 est positionnée à proximité de l'assise 3 de manière à protéger une zone lombaire basse d'un occupant (non représenté) du siège 1 dans le cas d'un déplacement intempestif de personnes ou de charges situées à l'arrière du siège 1. La traverse 14 est ici située dans une zone du siège 1 où les contraintes sont les plus élevées, dans le cas d'un choc à l'arrière.

La traverse 13 comprend des évidements (non représentés) traversant verticalement de part en part ladite traverse et apte à permettre le passage de supports 15, 16 de tiges 17, 18 d'un appui-tête 19. Bien entendu, les tiges 17, 18 peuvent coulisser à l'intérieur des évidemments pour permettre un réglage ergonomique de l'appui-tête 19.

Une coque 20 vient en appui contre des faces arrières des montants de support latéraux 11, 12, et de la traverse 14, la traverse 13 étant décalée vers l'arrière par rapport à la coque 20. Ladite coque 20 présente une surface sensiblement courbe en concordance de forme avec la traverse 14. En d'autres termes, la coque 20 présente un galbe sensiblement constant orienté vers l'avant.

La coque 20 comprend, à une extrémité inférieure, deux portions dirigées en direction du plancher 2 formant saillies (non référencées) sur lesquelles sont montés les éléments d'articulation 9, 10 pour permettre l'inclinaison du dossier 4 par rapport à l'assise 3.

La coque 20 indéformable, par exemple en tôle d'acier, constitue l'élément de rigidification principal du dossier 4 et forme avec les montants de support 11, 12 ainsi que les traverses 13, 14, la structure dudit dossier.

Pour réaliser l'assemblage du dossier 4, on assemble, par exemple par collage, ou soudage, ou encore vissage, dans un premier temps les montants de support 11, 12 avec la traverse 13, on positionne le sous-ensemble ainsi constitué de manière que les montants de support 11, 12 soient en appui contre une face avant de la coque 20, par l'intermédiaire d'évidements (non représentés) au niveau de la coque 20, puis on assemble conjointement la traverse 14 avec les montants de support 11, 12 et la coque 20. On dispose ainsi d'un ensemble unitaire.

Les montants de support latéraux 11, 12, les traverses 13, 14 et la coque 20 sont recouverts par une matelassure (non représentée), par exemple en mousse polyuréthane, pouvant présenter une surface d'appui sensiblement plane pour le dos de l'occupant du siège 1. D'une manière analogue, l'assise 3 comprend également une matelassure (non représentée).

Un tel siège comprenant un dossier équipé d'une coque indéformable montée sur cadre de forme général sensiblement rectangulaire permet, à faible coût, de satisfaire aux exigences de sécurité requises pour un occupant du siège tout en réduisant sensiblement l'encombrement du dossier, par rapport à un dossier conventionnel, notamment dans des zones latérales dudit siège, augmentant ainsi sensiblement l'agrément de confort d'une personne se trouvant à l'arrière.

## Revendications

1. Siège, notamment pour véhicule automobile, comprenant un dossier (4) et une assise (3) pourvue d'armatures (5, 6) et d'éléments d'articulation (9, 10) pour l'inclinaison du dossier relativement aux armatures, **caractérisé par le fait que** le dossier (4) est équipé d'une armature rigide comprenant au moins deux montants de support (11, 12) et une coque rigide (20) montée sur les montants de support, ladite coque formant structure de dossier et présentant une surface sensiblement courbe, les éléments d'articulation (9, 10) de l'assise (3) étant montés sur la coque rigide (20).

2. Siège selon la revendication 1, **caractérisé en ce que** l'armature comprend, en outre, des traverses (13, 14) inférieure et supérieure montées à chaque extrémité des montants de support.

3. Siège selon la revendication 2, **caractérisé en ce que** la traverse inférieure (14) est disposée à proximité d'une extrémité inférieure du dossier, et apte à assurer au moins en partie la protection du dos d'un occupant du siège.

4. Siège selon la revendication 2 ou 3, **caractérisé en ce que** la traverse inférieure (14) est en concordance de forme avec ladite coque (20) montée en contact sur ladite traverse.

5. Siège selon l'une quelconque des revendications 2 à 4, **caractérisé en ce que** les montants de support et les traverses comprennent des éléments évidés.

6. Siège selon l'une quelconque des revendications 2 à 5, **caractérisé en ce que** les montants de support et au moins une des traverses sont réalisés en acier.

7. Siège selon l'une quelconque des revendications 2 à 6, **caractérisé en ce que** la coque (20) est soudée sur les montants de support et sur au moins une de traverses.

8. Siège selon l'une quelconque des revendications 2 à 7, **caractérisé en ce que** la traverse supérieure comprend des évidements aptes à permettre le passage de tiges (17, 18) de support (15, 16) d'un appui-tête (19) du dossier.

9. Siège selon l'une quelconque des revendications précédentes, **caractérisé en ce que** le dossier (4) est équipé, en outre, d'une matelassure recouvrant au moins en partie la coque.

## Claims

1. Seat, notably for a motor vehicle, comprising a backrest (4) and a seat cushion (3) provided with frameworks (5, 6) and with articulation elements (9, 10) for inclining the backrest relative to the frameworks, **characterized in that** the backrest (4) is equipped with a rigid framework comprising at least two support uprights (11, 12) and a rigid shell (20) mounted on the support uprights, the said shell forming the backrest structure and having a substantially curved surface, the articulation elements (9, 10) of the seat cushion (3) being mounted on the rigid shell (20).

2. Seat according to Claim 1, **characterized in that** the framework further comprises flower and upper cross members (13, 14) mounted at each end of the support uprights.

3. Seat according to Claim 2, **characterized in that** the lower cross member (14) is sited near a lower end of the backrest and is able at least partially to protect the back of an occupant of the seat.

4. Seat according to Claim 2 or 3, **characterized in that** the lower cross member (14) hugs the shape of the said shell (20) mounted in contact with the said cross member.

5. Seat according to any one of Claims 2 to 4, **characterized in that** the support uprights and the cross members comprise elements that contain cavities.

6. Seat according to any one of Claims 2 to 5, **characterized in that** the support uprights and at least one of the cross members are made of steel.

7. Seat according to any one of Claims 2 to 6, **characterized in that** the shell (20) is welded to the support uprights and to at least one of the cross members.

8. Seat according to any one of Claims 2 to 7, **characterized in that** the upper cross member comprises cavities through which rods (17, 18) that support (15, 16) a head restraint (19) of the backrest can pass.

9. Seat according to any one of the preceding claims, **characterized in that** the backrest (4) is also equipped with cushioning that at least partially covers the shell.

## Patentansprüche

1. Sitz, insbesondere für ein Kraftfahrzeug, der eine Rückenlehne (4) und eine Sitzfläche (3) enthält, die mit Gestellen (5, 6) und mit Gelenkelementen (9, 10) zur Neigung der Rückenlehne bezüglich der Gestelle versehen ist, **dadurch gekennzeichnet, dass** die Rückenlehne (4) mit einem steifen Gestell ausgestattet ist, das mindestens zwei Stützholme (11, 12) und eine steife Schale (20) enthält, die auf die Stützholme montiert ist, wobei die Schale einen Rückenlehnenaufbau bildet und eine im Wesentlichen gekrümmte Fläche aufweist, wobei die Gelenkelemente (9, 10) der Sitzfläche (3) auf die steife Schale (20) montiert sind.

2. Sitz nach Anspruch 1, **dadurch gekennzeichnet, dass** das Gestell außerdem untere und obere Querträger (13, 14) enthält, die an jedem Ende der Stützholme montiert sind.

3. Sitz nach Anspruch 2, **dadurch gekennzeichnet, dass** der untere Querträger (14) in der Nähe eines unteren Endes der Rückenlehne angeordnet und in der Lage ist, zumindest zum Teil den Schutz des Rückens eines Insassen des Sitzes zu gewährleisten.

4. Sitz nach Anspruch 2 oder 3, **dadurch gekennzeichnet, dass** der untere Querträger (14) mit der Form der Schale (20) übereinstimmt, die in Kontakt auf den Querträger montiert ist.

5. Sitz nach einem der Ansprüche 2 bis 4, **dadurch gekennzeichnet, dass** die Stützholme und die Querträger ausgehöhlte Elemente enthalten.

6. Sitz nach einem der Ansprüche 2 bis 5, **dadurch gekennzeichnet, dass** die Stützholme und mindestens einer der Querträger aus Stahl hergestellt sind.

7. Sitz nach einem der Ansprüche 2 bis 6, **dadurch gekennzeichnet, dass** die Schale (20) auf die Stützholme und auf mindestens einen der Querträger geschweißt ist.

8. Sitz nach einem der Ansprüche 2 bis 7, **dadurch gekennzeichnet, dass** der obere Querträger Aushöhlungen enthält, die den Durchgang von Stangen (17, 18) eines Trägers (15, 16) einer Kopfstütze (19) der Rückenlehne erlauben.

9. Sitz nach einem der vorhergehenden Ansprüche, **dadurch gekennzeichnet, dass** die Rückenlehne (4) außerdem mit einer Polsterung ausgestattet ist, die die Schale zumindest zum Teil bedeckt.
